# EUROPEAN PATENT APPLICATION

(11) **EP 2 636 891 A2**
(43) Date of publication of application: **11.09.2013**
(21) Application number: 13001103.4
(22) Date of filing: 05.03.2013
(51) Int. Cl.: F03D 3/00, F03D 3/04

(54) **Wind turbine system constructive arrangement**

(30) Priority: 06.03.2012 BR 102012005018
(71) Applicant: Akitoshi Murata, CEP: 95076-090 Rio Grande do Sul (BR)
(72) Inventor: Akitoshi Murata, CEP: 95076-090 Rio Grande do Sul (BR)
(74) Representative: Temino Ceniceros, Ignacio

(57) **Abstract**

This patent refers to a system constructed by the wind turbine (1), placing two protectors; the first protector is placed on the opposite side of the wind direction to externally protect the wind turbine (1), called fixed protector (2), to divert the wind in the opposite rotary direction of wind turbine (1); the second protector is place in the intermediate area of the wind turbine (1), between the fixed protector (2) and located on the same side of the fixed protector (2), called mobile protector (3). Depending on the exit angle on the side of same wind direction and wind turbine rotation (1), this exit angle is controlled to contain the wind turbine rotation (1). This system may be installed upright, double or single, and horizontally, multiple.

## Description

### Object of the invention

This patent refers to a wind turbine system constructive arrangement. This new system proves to be more effective than the current system on the market.

### Background of the invention

The current model uses the same style of aircraft propeller; this current wind generator system needs to create pressure difference to achieve rotary force; when the wind moves the propeller, the upper part creates high pressure, while the lower part creates low pressure. By using this pressure difference, it does not take full advantage of the wind force, and generates noise by wind friction on propeller.

### Summary of the invention

The present invention solves the aforementioned technical problem. The solution consists in providing the wind turbine with two protectors: the first protector is to be placed on the opposite side to the wind direction, in order to protect the wind turbine externally, called fixed protector, to divert all the wind in the opposite rotary direction of wind turbine, in order not to impair the rotating strength and prevent noise emission.

The second protector is placed in the intermediate area of the wind turbine between the fixed protector and located on the same side of the fixed protector, called mobile protector depending on the exit angle on the side of same wind direction and wind turbine rotation, this exit angle is controlled with the rotation servo controller, which will establish the wind turbine rotational speed and will protect it from strong winds.

The disclosed system harnesses the power of direct wind, which will take it to the wind turbine without friction and against the wind direction, so as to produce power in more efficient and quieter manner. This system may be installed upright, double or single, and horizontally, multiple.

### Brief description of the drawings

To a better composition of the aforementioned, of invention related to this patent application is represented in:
Fig.1 - Shows a double vertical system that is a first embodiment of the invention.
Fig.2 - Shows a multiple horizontal system that is a second embodiment of the invention.

### Preferred embodiment of the invention

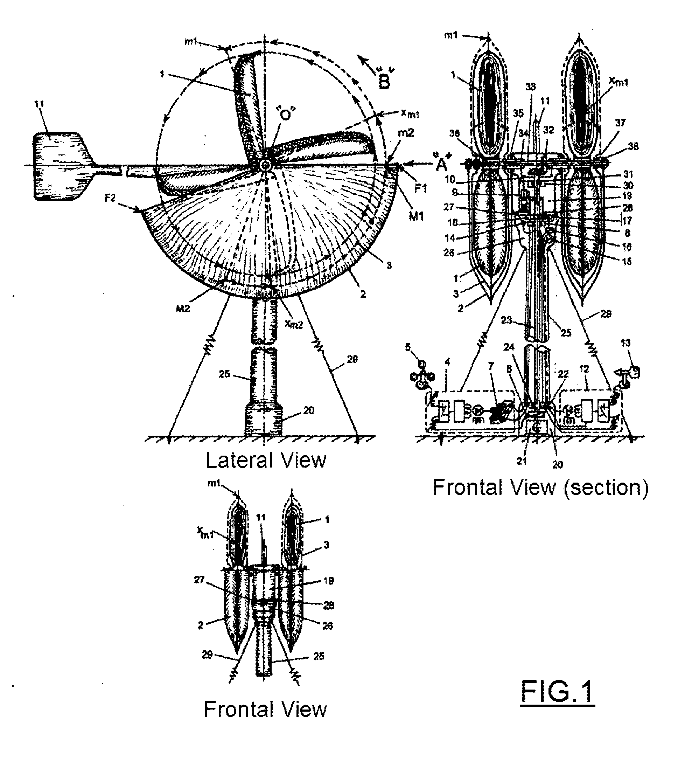

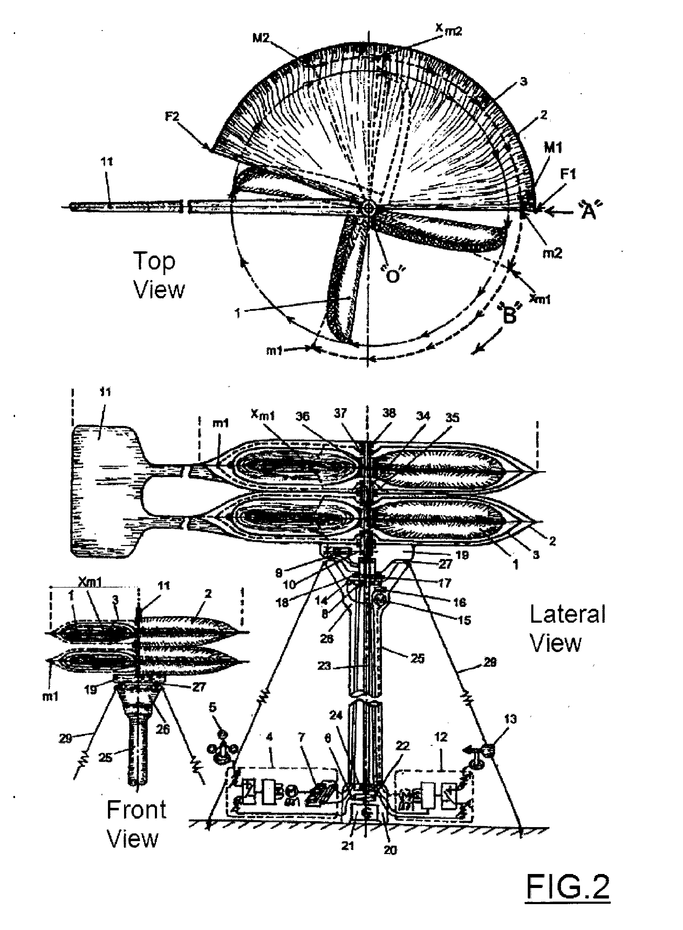

As seen in the figures attached hereto, the wind turbine system (1) may use a vertical double system as in Fig.1 or a multiple horizontal system as in Fig.2. These have the same functionality and effectiveness, and the use of tall towers and long propellers is not required. A more powerful wind generator and a lower tower can be used and, therefore, different sizes of wind generator may be used closer to the floor, resulting in greater ease of access for storage and/or maintenance. The double vertical system may also produce double wind power with balanced weight. The multiple horizontal system may produce multiplied wind power. Another advantage is the ability to attach fastening cables to the end of the tower, becoming more firm and steady during strong winds, which would make it safer.

The location of the two protectors, fixed and mobile, are according to the figures: First figure establishes the direction of the wind "A" and the wind turbine (1) rotation direction, in direction "B" the fixed protector (2) needs to protect the wind turbine (1) externally on the counter direction side of the wind in the area (F1-"O"-F2), the mobile protector (3) must be on the same side of the fixed protector (2) in the intermediate distance of the wind turbine (1), between the fixed protector(2) in the area (M1-"O"-M2), and the mobile protector (3). The wind turbine (1) speed control is achieved through the servo speed controller (4) with wind speed meter (5) and wind turbine rotation meter (6); depending on the need established, the rotation servo controller (4) activates the servo motor with hydraulic transformer (7); this hydraulic flow passes through the rotating hydraulic connection (8) and the hydraulic actuator is activated (9); by means of the actuating lever (10), this actuator controls the mobile protector (3) placed in position in figure (XM1-"o" XM2). When there are strong winds, the system automatically will move to position (ml-"o"-m2) in order to protect the total useful area with better security. This figure indicates the servo motor with hydraulic transformer (7) with hydraulic actuator (9), but the mechanism can be provided with servo motor with actuator mechanism. In this case, it will be necessary to change the rotary hydraulic connection (8) for a rotary electrical connection, but with same functionality.

Control in wind direction is also required and the fixed protector (2) must always be on the wind counter direction side through the wind direction guide (11). When the wind is low, guiding the wind direction guide (11) will be hardly achieved, so support from the wind direction controller servo (12) is required with the wind direction meter (13) and the wind turbine direction meter (14). Depending on the requirements set in the wind direction servo controller (12), it is achieved the automatic adjustment, by the servo motor mechanism (15), of the electromechanical coupling (16), the smaller gear (17), and the larger gear (18). The lager gear is fixed on the outside of the hydraulic rotary connection (8) and is also attached to the center of the tower swivel space base (19), which, in turn, is fixed to the wind direction guide (11), which is also fixed to the tower swivel space (19). This system has another advantage, when the servo motor (15) is stopped, the electromechanical coupling (16) separates the servo motor (15) with the smaller gear (17). Thus, the wind direction guide (11) works better, separating the larger load. This system is necessary because there are weak winds before strong winds. In this moment, this wind direction servo controller mechanism (12) directs the wind direction correctly, providing better security.

The best location to install servo controllers is the space at the tower base (20), also installing the wind generator (21). The shaft of this generator is connected to the output of the gearbox (22) to increase the rotation of the wind turbine (1) and this shaft holds the roller bearing with axial bearing (24) to secure and support the weight of the main shaft (23 ) within the tower base space (20) and then driving the turret (25) with servo motor wires (15), the electromechanical coupling wires (16), the wind turbine direction meter wires (14) and the hydraulic transformer motor servo outlet pipes (7), through the rotating hydraulic connection (8) to connect the hydraulic actuator (9) and to direct the position of the mobile protector (3) through the actuating lever (10). These wires and pipes shall be fixed to the side of the tower (25) as to not hinder the movement of the main shaft (23).

At the end of the tower, opening the fixed space of the tower (26) inside, there is the servo motor (15), the electromechanical coupling (16) in the center of the ceiling of this fixed space of the tower (26), fixing part of the hydraulic rotary connection (8) to pass the hydraulic flow into the hydraulic actuator (9). At the center of that rotating hydraulic connection (8) there is the main shaft (23), other part of the hydraulic rotating connection (8) on the outside, with larger gear (18) installed in the center of the base of the tower swivel space (19). After fixing the larger gear, it will be required to install other stabilization rotary connection (27). This stabilization rotary connection uses bearings to keep centered and the support of the weight on the rotary part with axial bearings. The other part of this stabilization rotary connection is installed on the corner of the tower fixed space ceiling (26). In the corner of the base, within the tower swivel space (19), it is fixed together part of the fixing arms (28). The other side of the fixing arms is installed to the side of the fixed protector (2). On the base of this fixed space of the tower (26) it is fixed with fixing cables (29) to help stabilize and make tower (25) steady. In case of strong winds, there will be greater security.

The main shaft (23) is fixed in the upper area of the tower swivel space (19), with roller bearing (30), the reinforcement plate (31), to stabilize the main shaft (23). Then, the bevel gear (32) is connected to change the direction of the main shaft rotation (23) from vertical to horizontal; through the bevel gear, horizontal shaft (33) is inserted; this horizontal shaft passes through the rotary bushing with bearing (34), this rotary bushing with bearing fixes, on one side, the actuating lever (10), for connecting the hydraulic actuator (9) and connecting the other side of the actuating lever, but this rotary bushing with bearing on the other hand is fixed to the mobile protector (3); above this rotary bushing with bearing there is another rotary bushing with bearing (35); this bushing is fixed with the fixed protector (2) and upper portion of the tower swivel space (19) in two equal sides; the horizontal shaft (33) passes through the bushing (36) and this bushing is securely fastened together with the horizontal axis and the wind turbine (1); the horizontal shaft runs through the rotary bushing with bearing (37 ), fixing other side of the mobile protector (3); the horizontal shafts runs through the rotary bushing with bearing (38), fixing the other side of the fixed protector (2).

The operation in Fig.2 is the same as in Fig.1. Therefore, the same items are used in both drawings. In Fig.2, however, there is no need for fixing arms (28), roller bearing (30), reinforcement plate (31), bevel gear (32) and horizontal shaft (33) using the main shaft (23) to the end.

The position of the wind turbine (1) and the hydraulic actuator (9), also in Fig.1, is vertical, and the quantity of wind turbine is double, but can be single. In this case, it is required to increase two more bevel gears. In Fig.2, it is horizontal and the number of wind turbines is multiple, only defining the wind generator capacity, the environment, and functionality space.

## Claims

1. Constructive arrangement in a system of wind turbine (1)
characterized for being constructed by wind turbine (1) placing two protectors (2,3) a first fixed protector (2) and a second mobile protector (3);
wherein the first protector (2) is placed at the side that is against the direction of the wind to protect externally the wind turbine (1) to divert the wind in opposite rotary direction of the wind turbine (1);
wherein the second mobile protector (3) is placed in the intermediate area of the wind turbine (1) between the first fixed protector (2) and located on the same side of the first fixed protector (2); and
wherein depending on an exit angle on the side of same wind direction and wind turbine rotation (1); this exit angle is controlled with the rotation servo controller (4), depending on the establishment of rotation in the wind turbine (1).

2. The constructive arrangement of claim 1 which is installed in a position with respect to the wind turbine (1) selected from upright, double or single, and horizontally, multiple.
